# EUROPEAN PATENT SPECIFICATION

(11) **EP 3 230 867 B1**
(45) Date of publication and mention of the grant of the patent: **21.11.2018**
(21) Application number: 15813967.5
(22) Date of filing: 30.11.2015
(51) Int. Cl.: G06F 11/34

(54) **BROWSER PROVIDED WEBSITE STATISTICS**
BROWSER WEBSITESTATISTIKEN
STATISTIQUES DE SITE WEB FOURNIES PAR BROWSER

(30) Priority: 09.12.2014 US 201414564781
(43) Date of publication of application: 18.10.2017
(73) Proprietor: Microsoft Technology Licensing, LLC, Redmond, Washington 98052-6399 (US)
(72) Inventor: PAPE, Jeffrey Leon, Redmond, Washington 98052-6399 (US)
(74) Representative: Goddar, Heinz J.
(86) International application number: PCT/US2015/062875
(87) International publication number: WO 2016/094099

(56) References cited:
- WO-A2-2014/204504
- US-A1- 2010 169 792
- US-A1- 2010 251 128
- US-A1- 2012 084 133
- US-A1- 2013 205 020

## Description

### BACKGROUND

It is important for website owners or developers to be able to view website statistics and analytics regarding user navigation to their website, such as the number of "hits" the website receives, the number of "unique" users that visit the website, and so forth. Conventional website analytics solutions, such as Google Analytics, StatCounter, Woopra, and Site Meter, require client side code to be implemented in the code of the website in order to capture user navigations to the website which can be used to generate website analytics. Further, some website developers create custom tracking solutions by modifying the code of the website to include customized analytics tracking code.

Modifying the code of the website to include the analytics code, however, takes time and effort from the owner or developer of the website. Furthermore, many website owners have a limited understanding of how to modify the code of the website to include an analytics tracker. Thus, conventional website analytics solutions prevent many website owners from accessing website analytics about their website. Furthermore, conventional website analytics solutions are limited to providing statistics and analytics based on the limited set of information that a web browser exposes to the analytics tracker during visits to the website.

US 2012/0084133 A1 describes a technique for Internet usage monitoring and in particular for distinguishing between parent and child web pages and/or browser tabs in focus. User interaction with a browser on a computer is monitored by a browser monitor. The browser monitor reports data to a monitoring data collection server. The server receives data from multiple client devices each monitored by a separate browser monitor. The browser monitor gathers browser information data from the browser, e.g. PageInfo data, for analysis.

US 2013/0205020 A1 describes a technique for functional and load-testing of websites. Real-time analytics of web performance using actual user measurements is performed. A results server receives beacons, each beacon containing data items. Each beacon is generated in real-time from a user session. The data item relates to a user experience on a particular website or web application, collected by a library running on the browser of the client device. The server receiving the beacon information may aggregate that data along with similar data received from other users accessing the same website. For every user who visits that website, the browser running the library on the user's client device measures various metrics and records data that is then "beaconed" back to the results server in real-time as the user navigates through or uses the website. The corresponding (aggregated) data content is used for generating a real-time analytic dashboard.

### SUMMARY

Browser provided website statistics is described. In one or more implementations, usage data corresponding to navigation to websites using a web platform (e.g., web browser) is collected at computing devices which implement the web platform. The usage data may also include resource usage data (e.g., application usage data) as well as personal information about the user (e.g., age, sex, and any other type of demographic information). The usage data is communicated to a centralized analytics service which aggregates usage data received from web platforms implemented at multiple different computing devices.

At the analytics service, the usage data is correlated with individual websites and analyzed to generate website statistics for each individual website. The website statistics can then be exposed to a user associated with the website (e.g., the owner or the developer of the website) to enable access to the website statistics without the need to modify the code of the website to include an analytics tracker or a customized tracking solution.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

According to the present invention, there is proposed a system according to claim 1 and a computing device according to independent claim 7, said computing device relating to the data collecting and correlating aspects of claim 1.

Dependent claims relate to preferred embodiments of the present invention.

### BRIEF DESCRIPTION OF THE DRAWINGS

The detailed description is described with reference to the accompanying figures. The same numbers are used throughout the drawings to reference like features and components.
Fig. 1 is an illustration of an environment in an example implementation that is operable to support techniques described herein.
Fig. 2 illustrates a system in which a data collection module generates usage data for communication to an analytics service in accordance with one or more implementations.
Fig. 3 illustrates a system in which an analytics service generates website statistics for individual websites based on usage data received from web platforms in accordance with one or more implementations.
Fig. 4 illustrates an example system of exposing website statistics to a user associated with a website in accordance with one or more implementations.
Fig. 5 illustrates an example method of generating usage data for communication to an analytics service in accordance with one or more implementations.
Fig. 6 illustrates an example method of generating website statistics for individual websites based on usage data received from web platforms in accordance with one or more implementations.
Fig. 7 illustrates an example method 700 of accessing website statistics for an individual website without modifying code of the website.
Fig. 8 illustrates an example system that includes an example computing device that is representative of one or more computing systems and/or devices that may implement the various techniques described herein.

### DETAILED DESCRIPTION

### Overview

Browser provided website statistics is described. Techniques described herein enable a user associated with a website (e.g., an owner or a developer of the website) to view browser provided website statistics for the website without implementing client side tracking solutions on the website (e.g., analytics tracking code).

In one or more implementations, usage data corresponding to navigation to websites using a web platform (e.g., web browser) is collected at computing devices which
implement the web platform. The usage data may also include resource usage data (e.g., application usage data) as well as personal information about the user (e.g., age, sex, and any other type of demographic information). The usage data is communicated to a centralized analytics service which aggregates usage data received from web platforms implemented at multiple different computing devices.

At the analytics service, the usage data is correlated with individual websites and analyzed to generate website statistics for each individual website. The website statistics can include "navigation-centric website statistics", such as page hits, visit duration, unique users, or performance metrics. Alternately or additionally, the website statistics can include user-centric website statistics which are not generally provided by conventional analytics solutions, such as application usage statistics or user demographic statistics.

The website statistics can then be exposed to a user associated with the website to enable access to the website statistics without the need to modify the code of the website to include an analytics tracker or a customized tracking solution. Thus, the described techniques enable access to website analytics without requiring extra work by the owner or developer of the website.

### Example Environment

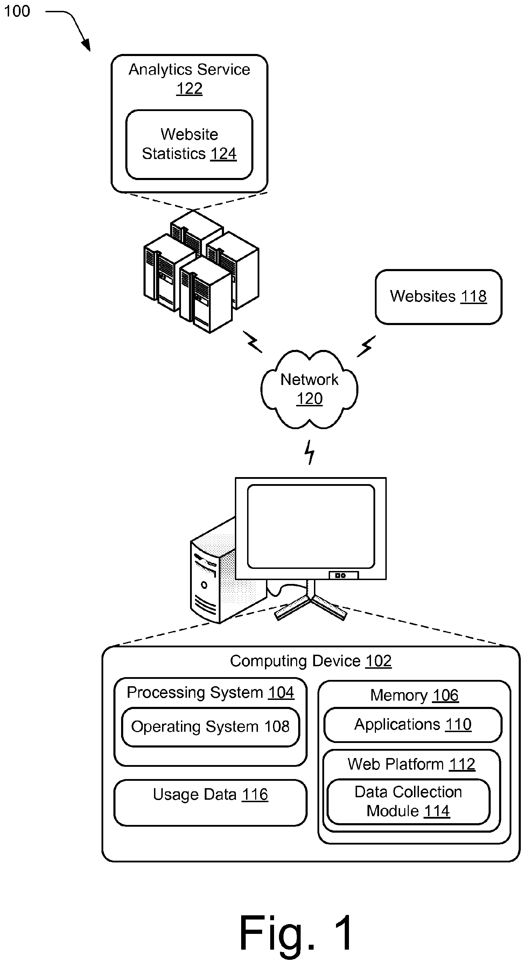

Fig. 1 is an illustration of an environment 100 in an example implementation that is operable to support techniques described herein. The illustrated environment 100 includes a computing device 102 having one or more hardware components, examples of which include a processing system 104 and a computer-readable storage medium that is illustrated as a memory 106 although other components are also contemplated as further described below.

The computing device 102 may be configured in a variety of ways. For example, a computing device may be configured as a computer that is capable of communicating over a network, such as a desktop computer, a mobile station, an entertainment appliance, a set-top box communicatively coupled to a display device, a wireless phone, a game console, educational interactive devices, point of sales devices, and so forth. Thus, the computing device 102 may range from full resource devices with substantial memory and processor resources (e.g., personal computers, game consoles) to a low-resource device with limited memory and/or processing resources (e.g., traditional set-top boxes, hand-held game consoles). Additionally, although a single computing device 102 is shown, the computing device 102 may be representative of a plurality of different devices, such as multiple servers utilized by a business to perform operations such as by a web service, a remote control and set-top box combination, an image capture device and a game console configured to capture gestures, and so on. In addition, it may apply to apparatuses including a plurality of display devices.

The computing device 102 is further illustrated as including an operating system 108, although other embodiments are also contemplated in which an operating system is not employed. The operating system 108 is configured to abstract underlying functionality of the computing device 102 to applications 110 that are executable on the computing device 102. For example, the operating system 108 may abstract the processing system 104, memory 106, and/or network functionality of the computing device 102 such that the applications 110 may be written without knowing "how" this underlying functionality is implemented. The application 110, for instance, may provide data to the operating system 108 to be rendered and displayed by a display module without understanding how this rendering will be performed. The operating system 108 may also represent a variety of other functionality, such as to manage a file system and user interface that is navigable by a user of the computing device 102.

Computing device 102 also includes a web platform 112. Web platform 112 works in connection with content of the web, e.g. public content such as websites and the like. A web platform can include and make use of many different types of technologies such as, by way of example and not limitation, URLs, HTTP, REST, HTML, CSS, JavaScript, DOM, and the like. The web platform can also work with a variety of data formats such as XML, JSON, and the like. Web platforms can include web browsers, local applications such as a Windows® Store application, and the like. In the examples described below, a web platform in the form of a web browser that navigates to various websites is utilized. It is to be appreciated and understood, however, that the inventive principles can be employed by web platforms other than web browsers.

Computing device 102 is illustrated as including a data collection module 114 that can be stored on computer-readable storage memory (*e.g*., memory 106), such as any suitable memory device or electronic data storage implemented by the device. In implementations, data collection module 114 is a component of web platform 112. For example, data collection module 114 can be implemented as a component of a web browser.

Data collection module 114 is representative of functionality to perform one or more techniques to collect usage data 116 corresponding to user navigation to various websites 118 using web platform 112 as well as user interaction or engagement with resources or applications other than web platform 112.

Data collection module 114 is configured to communicate the usage data 116 over network 120 to an analytics service 122. Analytics service 122 includes functionality operable to collect usage data 116 from multiple computing devices 102 over network 120, and to correlate usage data 116 with individual websites 118. Analytics service 122 analyzes usage data 116 to generate website statistics 124 (e.g., analytics) associated with individual websites 118.

Analytics service 122 is further configured to expose website statistics 124 to one or more users associated with each individual website 118, such as an owner of website 118, a developer of website 118, or any other individual permitted to access website statistics 124 associated with website 118. Thus, owners and developers of websites are able to view website statistics 124 associated with their website without the need to implement an analytics tracker on their website.

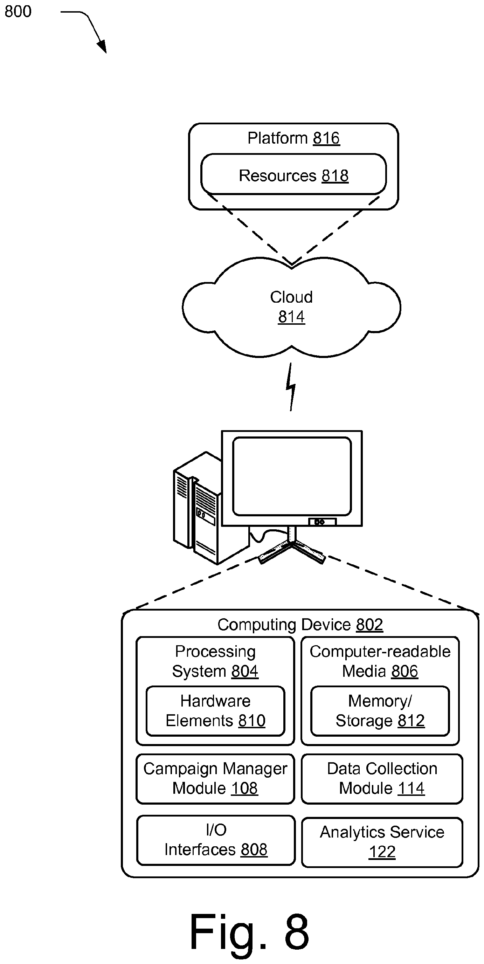

Although illustrated as part of computing device 102, functionality of data collection module 114 may also be implemented in a distributed environment, remotely via network 120 (e.g., "over the cloud") as further described in relation to Fig. 8, and so on. Although network 120 is illustrated as the Internet, the network may assume a wide variety of configurations. For example, network 120 may include a wide area network (WAN), a local area network (LAN), a wireless network, a public telephone network, an intranet, and so on. Further, although a single network 120 is shown, network 120 may also be configured to include multiple networks.

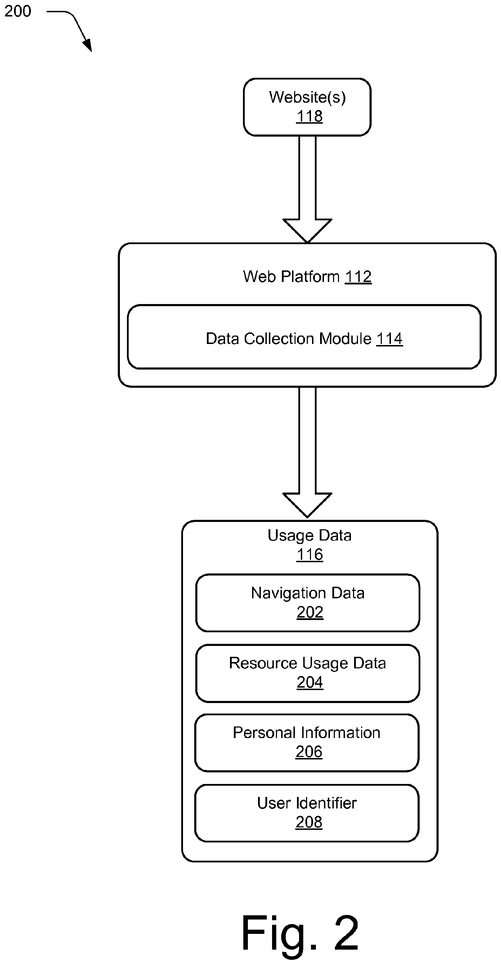

Fig. 2 illustrates a system 200 in which a data collection module generates usage data for communication to an analytics service in accordance with one or more implementations.

In this example, data collection module 114 monitors user navigation to various websites 118 using web platform 112, and generates usage data 116. In some cases, the usage data comprises existing website telemetry data that is often collected by web platforms, such as web browsers.

In one or more implementations, usage data 116 includes navigation data 202 (e.g., browsing history data) corresponding to navigation to websites 118 using web platform 112. Navigation data 202 may include web addresses (e.g., URLs) of websites 118 navigated to using web platform 112. As described herein, the term "website" is used to refer to websites or web pages that can be navigated to via a web platform using a web address of the website. Examples of web addresses include uniform resource locators (URLs), uniform resource identifiers (URIs), internationalized resource identifiers (IRIs), and internationalized domain names (IDNs).

Navigation data 202 may also include other types of information associated with website navigation using web platform 112, such as performance metrics associated with each website, 404 errors, and so forth.

In one or more implementations, usage data 116 further includes resource usage data 204 corresponding to interactions by the user with resources or applications 110 other than web platform 112. For example, the resource usage data 204 may include application usage data (e.g., a list of word processing applications, media player applications, or social media applications used by a user of computing device 102), document usage (e.g., word processing documents or spreadsheets created using applications), and media content usage (e.g., music files or video files played back at computing device 102).

Resource usage data 204 may also include the number of launches of each application and/or the usage time associated with each application. For example, resource usage data 204 may indicate that a user launches the application Microsoft Word 10 times per week, and uses Microsoft Word for 40 hours per week.

In one or more implementations, the usage data may also include personal information 206 associated with the user, such as an age of the user, location of the user, sex of the user, interests of the user, and so forth. Notably, the personal information 206 may include any type of personal information that can be obtained from the user's interactions with web platform 112 and/or other applications 110 or operating system 108 implemented on computing device 102.

Data collection module 114 is configured to communicate usage data 116 to analytics service 122 over network 120 to cause analytics service 122 to compile usage data 116, along with usage data received from multiple additional computing devices which also each implement instances of web platform 112.

In one or more implementations, data collection module 114 includes a user identifier 208 of a user associated with web platform 112 with the usage data 116 to enable the analytics service 122 to generate website statistics based on resource usage data 204 and/or personal information 206.

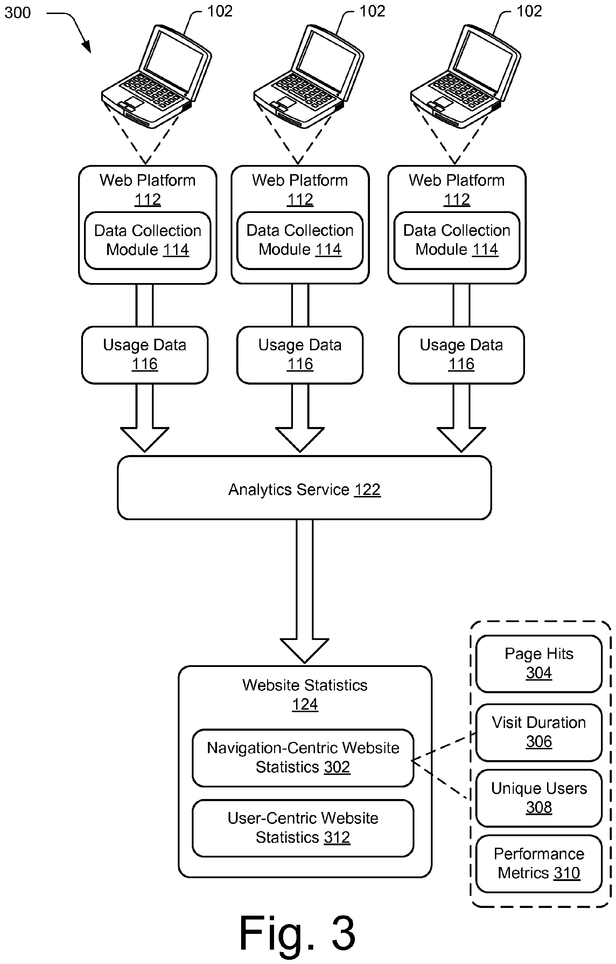

Fig. 3 illustrates a system 300 in which an analytics service generates website statistics for individual websites based on usage data received from web platforms in accordance with one or more implementations.

In system 300, rather than generating website analytics using data collected by an analytics tracker implemented at an individual website, analytics service 122 receives usage data 116 from web platforms 112 (e.g., web browsers) implemented at a plurality of computing devices 102 over network 120, such as the usage data collected in system 200. In some cases, usage data 116 may be received from data collection module 114 which may be implemented as a component of web platform 112 or a web browser, and thus usage data 116 may be considered "browser provided" usage data.

Analytics service 122 correlates the usage data 116 received from web platforms 112 with individual websites 118. To do so, analytics service 122 analyzes usage data 116 to recognize websites 118 based on the associated web address (e.g., URL), and then associates the usage data 116 with the corresponding website 118. For example, if the usage data indicates that the user navigated to the website msn.com 5 times, then analytics service 122 correlates this usage data with the website msn.com.

Next, for each individual website identified in usage data 116, analytics service 122 analyzes the usage data 116 to generate website statistics 124 associated with the individual website 118. Website statistics 124 may include, navigation-centric website statistics 302 based on navigation data 202. As described herein, navigation-centric website statistics includes statistics or analytics related to use of web platform 112.

In one or more implementations, navigation-centric website statistics 302 include page hits 304. Page hits 304 correspond to the total number of user navigations to a particular website 118 using web platform 112. Total page hits can be generated for a particular website domain as a whole, and/or broken down for particular sub-domains or sub-pages within each domain. In one or more implementations, page hits 304 may count multiple navigations to website 118 by the same user. To determine page hits 304, analytics service 122 parses navigation data 202 to determine the total number of distinct navigations to the website using web platform 112.

In one or more implementations, navigation-centric website statistics 302 includes an average visit duration 306 associated with the website navigations (e.g., the average amount of time spent on the website during visits). To determine visit duration 306, analytics service 122 determines the visit time associated with each navigation to website 118 using web platform 112. The visit time can be calculated in a variety of different ways. For example, in some cases the visit time corresponds to the total amount of time that the website is open in web platform 112 (e.g., open in a tab of the web browser). Alternately, the visit time may correspond to the total amount of time that the website is in the foreground tab of the web browser. The average visit duration 306 may be calculated by dividing the total visit time of navigations to the website 118 by page hits 304.

In one or more implementations, navigation-centric website statistics 302 include the number of unique users 308 which navigated to website 118 using web platform 112. To calculate the number of unique users 308, analytics service 122 counts website navigations to website 118 for each user just one time. Thus, if a user navigates to the website msn.com 5 times, this will only count as one unique user. Analytics service 122 can make this calculation because the usage data includes user identifier 208. Further, user identifier 208 may be associated across multiple devices utilized by the user, thus even if the user navigates to the website using a mobile phone, laptop, and desktop, the service can recognize that these three navigations are performed by one unique user.

In one or more implementations, navigation-centric website statistics 302 further includes performance metrics 310, such as the amount of time that it takes the website to load, 404 errors, website hang totals, and so forth.

Analytics service 122 can generate website statistics 124 on a per domain basis and/or on a per page basis. For example, consider that the website msn.com also has sub-pages or sub-domains within the website, such as msn.com/sports, msn.com/money, and msn.com/news. In this case, analytics service 122 can generate website statistics 124 for the domain msn.com as a whole (which would include each of the sub-domains), as well as for each individual sub-domain within the domain msn.com.

In one or more implementations, analytics service 122 is further configured to generate user-centric website statistics 312 based on resource usage data 204 and/or personal information 206. To do so, analytics service 122 determines that the user navigated to the individual website 118 based on the navigation data 202 and the user identifier 208 of the user contained in usage data 116. Then, analytics service 122 generates user-centric website statistics 312 based on resource usage data 204 and/or personal information 206, and includes user-centric website statistics 312 with website statistics 124 associated with the individual website 118.

As described herein, user-centric website statistics 312 includes statistics or analytics corresponding to the users that navigated to an individual website. For example, user-centric website statistics 312 may include demographic statistics about users that navigate to each individual website 118, application usage statistics about individual users that navigate to each individual website 118, and so forth. Notably, user-centric website statistics 312 may not be provided by conventional analytics providers because conventional analytics providers can only provide analytics based on a limited set of information that the browser exposes.

Application usage statistics may include information associated with application launches and application engagement (e.g., how long the application is running and/or how long the user is engaging with the application). Application usage statistics may correspond to usage statistics for any type of applications such as productivity application, gaming applications, other web browsers, and so forth.

After generating website statistics 124, analytics service 122 exposes website statistics 124 to a user associated with each individual website 118 (e.g., an owner or developer of the website) to enable access to website statistics 124.

Website statistics 124 can be exposed in a variety of different ways. For example, website statistics 124 can be exposed in a user interface associated with browser provided development tools, such as F12 Developer Tools. Alternately, website statistics 124 may be exposed through a user interface that is accessible through a website a log-in or an API call.

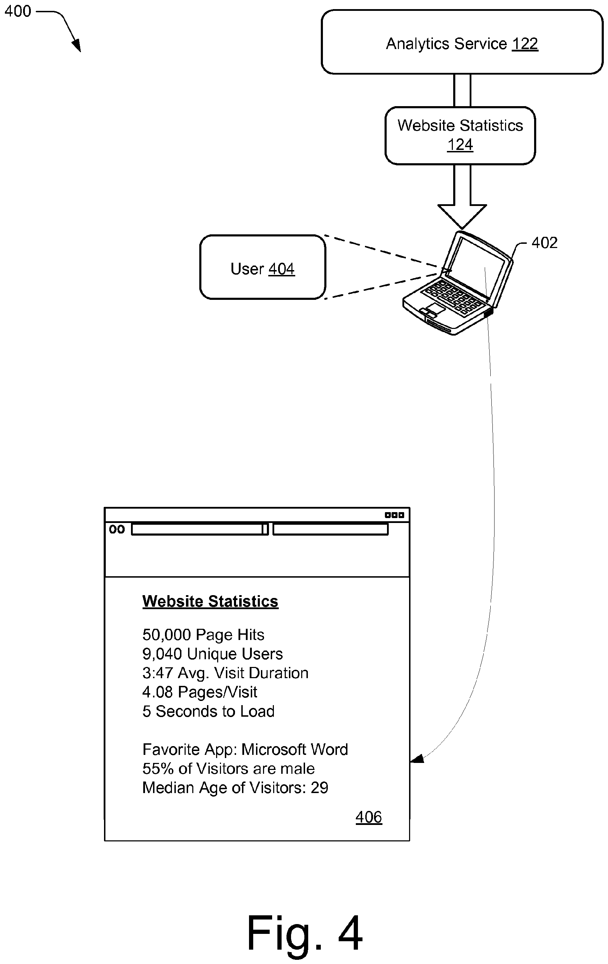

Fig. 4 illustrates an example system 400 of exposing website statistics to a user associated a website in accordance with one or more implementations.

In system 400, analytics service 122 exposes website statistics 124 to a computing device 402 associated with a user 404 associated with the website, such as an owner or developer of the website, or any other individual authorized or permitted to access website statistics 124. As discussed throughout, website statistics 124 are provided to computing device 402 associated with user 404 without modifying code of the individual website to include any type of analytics tracker or customized solution.

In system 400, analytics service 122 enables access to website statistics 124 though a website statistics user interface 406. In this example, website statistics user interface 406 presents navigation-centric website statistics 302 for page hits 304 (50,000 total page hits), unique users 308 (9,040 unique users), visit duration 306 (3:47 average visit duration and 4.08 pages per visit), and performance metrics 310 (5 seconds to load website).

In addition, website statistics user interface 406 provides user-centric website statistics 312 indicating that the favorite application of users that navigate to the website is Microsoft Word, that 55% of the users that navigate to the website are male, and that the median age of visitors to the website is 29.

Website statistics user interface 406 is just an example of a user interface that may be used to display website statistics 124. It is to be appreciated that any type of statistics, analytics, or other information that is generated by analytics service 122 can be presented in website statistics user interface 406 in any type of format.

### Example Methods

The methods described herein are shown as sets of blocks that specify operations performed but are not necessarily limited to the order or combinations shown for performing the operations by the respective blocks. The techniques are not limited to performance by one entity or multiple entities operating on one device.

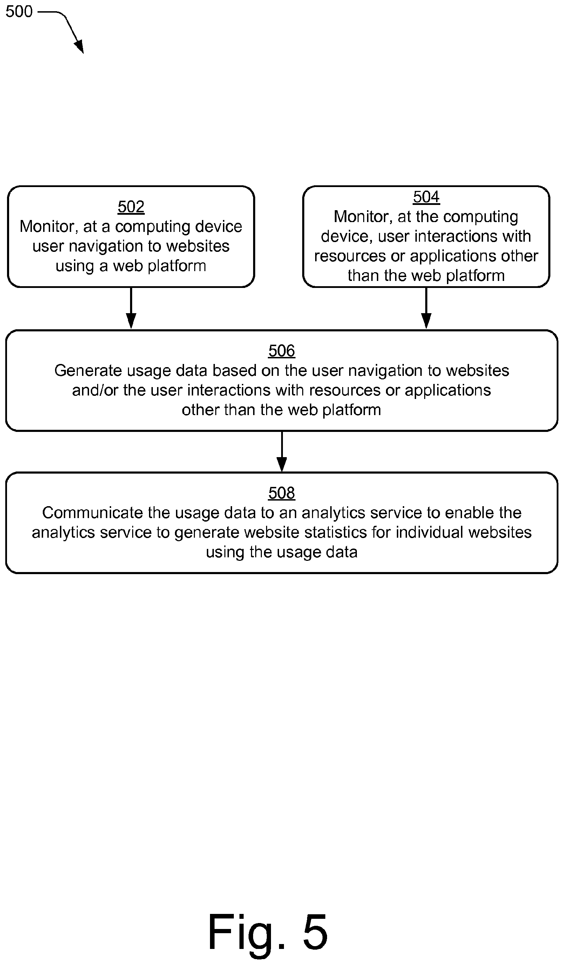

Fig. 5 illustrates an example method 500 of generating usage data for communication to an analytics service in accordance with one or more implementations.

At 502, user navigation to websites using a web platform is monitored at a computing device. For example, data collection module 114 monitors user navigation to websites 118 using web platform 112 implemented at computing device 102.

Alternately or additionally, at 504, user interactions with resources or applications other than the web platform are monitored at the computing device. For example, data collection module 114 monitors user interactions with resources or applications other than web platform 112 at computing device 102.

At 506, usage data is generated based on the user navigation to websites and/or the user interactions with resources or applications other than the web platform. For example, data collection module 114 generates usage data 116 based on the user navigation detected at step 502 and/or the user interactions detected at step 504.

At 508, the usage data is communicated to an analytics service to enable the analytics service to generate website statistics for individual websites using the usage data. For example, data collection module 114 causes usage data 116 to be communicated to analytics service 122 to enable analytics service 122 to generate website statistics 124 using usage data 116 and additional usage data received from other computing devices which implement instances of web platform 112. The usage data 116 communicated to analytics service 122 may include navigation data 202, resource usage data 204, personal information 206, and/or user identifier 208.

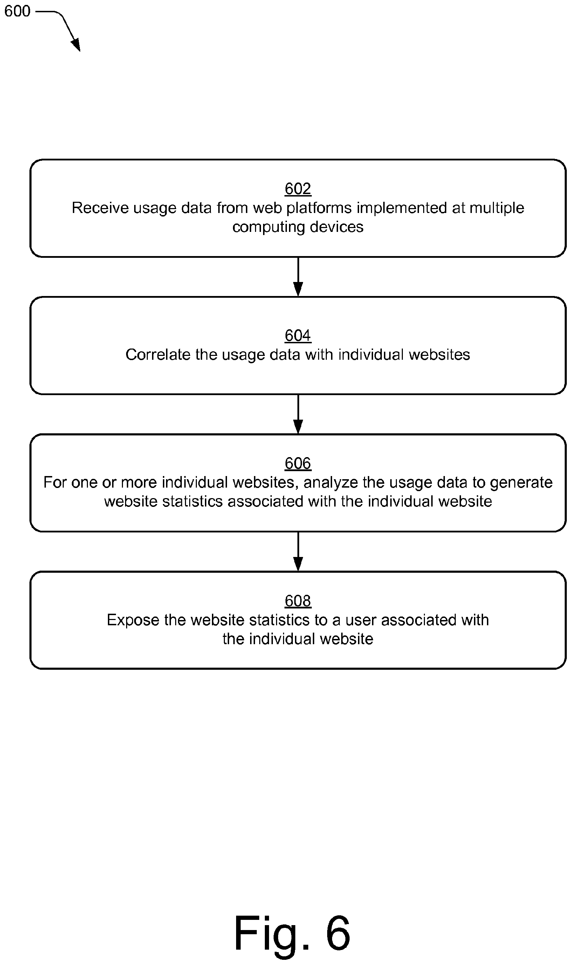

Fig. 6 illustrates an example method 600 of generating website statistics for individual websites based on usage data received from web platforms in accordance with one or more implementations.

At 602, usage data is received from web platforms implemented at multiple computing devices. For example, analytics service 122 receives usage data 116 from various web platforms 112 implemented at multiple computing devices 102 over network 120.

At 604, the usage data is correlated with individual websites, and at 606, for one or more of the individual websites, the usage data is analyzed to generate website statistics associated with the individual website. For example, analytics service 122 correlates usage data 116 with individual websites 118, and analyzes usage data 116 to generate website statistics 124 associated with the individual website 118. Website statistics 124 may include navigation-centric website statistics, such as page hits 304 to the website, an average visit duration 306 of visits to the website, unique users 308 that visited the website, or performance metrics 310 associated with the website, and so forth. In one or more implementations, website statistics 124 further includes user-centric website statistics 312 associated with a user of the web platform that navigates to the individual websites, such as personal information associated with the user and/or application usage.

At 608, the website statistics are exposed to a user associated with the individual website. For example, analytics service 122 exposes website statistics 124 to user 404 associated with the website by enabling the user to view website statistics user interface 406 on a display of computing device 402.

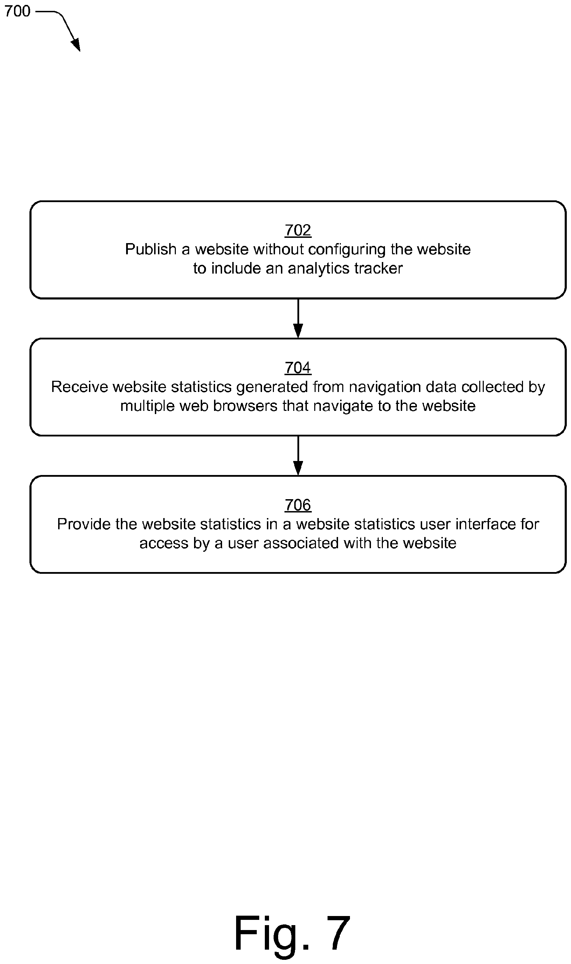

Fig. 7 illustrates an example method 700 of accessing website statistics for an individual website without modifying code of the website.

At 702, a website is published without configuring the website to include an analytics tracker. For example, a website 118 is published to the Internet without configuring the website to include analytics tracking code.

At 704, website statistics are received. The website statistics are generated from navigation data collected by multiple web browsers that navigate to the website. For example, website statistics 122 are received that are generated by analytics service 122 from navigation data 202 collected by multiple web browsers that navigate to website 118.

At 706, the website statistics are provided in a website statistics user interface for access by a user associated with the website. For example, website statistics 122 are provided in website statistics user interface 406 for access by user 404 associated with website 118.

### Example System and Device

Fig. 8 illustrates an example system generally at 800 that includes an example computing device 802 that is representative of one or more computing systems and/or devices that may implement the various techniques described herein. This is illustrated through inclusion of data collection module 114 and analytics service 122 which may be configured to implement browser provided website statistics techniques as previously described.

The computing device 802 may be, for example, a server of a service provider, a device associated with a client (e.g., a client device), an on-chip system, and/or any other suitable computing device or computing system. The example computing device 802 as illustrated includes a processing system 804, one or more computer-readable media 806, and one or more I/O interface 808 that are communicatively coupled, one to another. Although not shown, the computing device 802 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 804 is representative of functionality to perform one or more operations using hardware. Accordingly, the processing system 804 is illustrated as including hardware element 810 that may be configured as processors, functional blocks, and so forth. This may include implementation in hardware as an application specific integrated circuit or other logic device formed using one or more semiconductors. The hardware elements 810 are not limited by the materials from which they are formed or the processing mechanisms employed therein. For example, processors may comprise semiconductor(s) and/or transistors (e.g., electronic integrated circuits (ICs)). In such a context, processor-executable instructions may be electronically-executable instructions.

The computer-readable storage media 806 is illustrated as including memory/storage 812. The memory/storage 812 represents memory/storage capacity associated with one or more computer-readable media. The memory/storage component 812 may include volatile media (such as random access memory (RAM)) and/or nonvolatile media (such as read only memory (ROM), Flash memory, optical disks, magnetic disks, and so forth). The memory/storage component 812 may include fixed media (e.g., RAM, ROM, a fixed hard drive, and so on) as well as removable media (e.g., Flash memory, a removable hard drive, an optical disc, and so forth). The computer-readable media 806 may be configured in a variety of other ways as further described below.

Input/output interface(s) 808 are representative of functionality to allow a user to enter commands and information to computing device 802, and also allow information to be presented to the user and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., which may employ visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 802 may be configured in a variety of ways as further described below to support user interaction.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques may be implemented on a variety of commercial computing platforms having a variety of processors.

An implementation of the described modules and techniques may be stored on or transmitted across some form of computer-readable media. The computer-readable media may include a variety of media that may be accessed by the computing device 802. By way of example, and not limitation, computer-readable media may include "computer-readable storage media" and "computer-readable signal media."

"Computer-readable storage media" may refer to media and/or devices that enable persistent and/or non-transitory storage of information in contrast to mere signal transmission, carrier waves, or signals per se. Thus, computer-readable storage media refers to non-signal bearing media. The computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Computer-readable signal media" may refer to a signal-bearing medium that is configured to transmit instructions to the hardware of the computing device 802, such as via a network. Signal media typically may embody computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 810 and computer-readable media 806 are representative of modules, programmable device logic and/or fixed device logic implemented in a hardware form that may be employed in some embodiments to implement at least some aspects of the techniques described herein, such as to perform one or more instructions. Hardware may include components of an integrated circuit or on-chip system, an application-specific integrated circuit (ASIC), a field-programmable gate array (FPGA), a complex programmable logic device (CPLD), and other implementations in silicon or other hardware. In this context, hardware may operate as a processing device that performs program tasks defined by instructions and/or logic embodied by the hardware as well as a hardware utilized to store instructions for execution, e.g., the computer-readable storage media described previously.

Combinations of the foregoing may also be employed to implement various techniques described herein. Accordingly, software, hardware, or executable modules may be implemented as one or more instructions and/or logic embodied on some form of computer-readable storage media and/or by one or more hardware elements 810. The computing device 802 may be configured to implement particular instructions and/or functions corresponding to the software and/or hardware modules. Accordingly, implementation of a module that is executable by the computing device 802 as software may be achieved at least partially in hardware, e.g., through use of computer-readable storage media and/or hardware elements 810 of the processing system 804. The instructions and/or functions may be executable/operable by one or more articles of manufacture (for example, one or more computing devices 802 and/or processing systems 804) to implement techniques, modules, and examples described herein.

The techniques described herein may be supported by various configurations of the computing device 802 and are not limited to the specific examples of the techniques described herein. This functionality may also be implemented all or in part through use of a distributed system, such as over a "cloud" 814 via a platform 816 as described below.

The cloud 814 includes and/or is representative of a platform 816 for resources 818. The platform 816 abstracts underlying functionality of hardware (e.g., servers) and software resources of the cloud 814. The resources 818 may include applications and/or data that can be utilized while computer processing is executed on servers that are remote from the computing device 802. Resources 818 can also include services provided over the Internet and/or through a subscriber network, such as a cellular or Wi-Fi network.

The platform 816 may abstract resources and functions to connect the computing device 802 with other computing devices. The platform 816 may also serve to abstract scaling of resources to provide a corresponding level of scale to encountered demand for the resources 818 that are implemented via the platform 816. Accordingly, in an interconnected device embodiment, implementation of functionality described herein may be distributed throughout the system 800. For example, the functionality may be implemented in part on the computing device 802 as well as via the platform 816 that abstracts the functionality of the cloud 814.

### Conclusion and Example Implementations

Example implementations described herein include, but are not limited to, one or any combinations of one or more of the following examples:

A computer-implemented method comprising receiving usage data from web platforms implemented at a plurality of computing devices, the usage data including navigation data corresponding to navigation to websites using the web platforms; correlating the usage data with individual websites navigated to using the web platforms; for each individual website, analyzing the usage data to generate navigation-centric website statistics associated with the individual website; and exposing the navigation-centric website statistics associated with the individual websites to a user associated with the individual website.

A computer-implemented method as described above, wherein the navigation-centric website statistics are exposed to the user associated with the individual website without modifying code of the individual website to include analytics tracking code.

A computer-implemented method as described above, wherein the web platforms comprise web browsers.

A computer-implemented method as described above, wherein the navigation data includes web addresses of websites navigated to using the web platforms.

A computer-implemented method as described above, wherein the website statistics comprises one or more of page hits to the website, an average visit duration of visits to the website, unique users that visited the website, or performance metrics associated with the website.

A computer-implemented method as described above, wherein the usage data further comprises a user identifier of a user associated with each web platform.

A computer-implemented method as described above, wherein the usage data further comprises at least one of personal information associated with the user or resource usage data corresponding to interactions by the user with resources or applications other than the web platform.

A computer-implemented method as described above, further comprising determining that the user navigated to the individual website based on the navigation data and the personal identifier of the user contained in the usage data; generating user-centric website statistics based on at least one of the personal information associated with the user or the resource usage data associated with the user; and including the user-centric website statistics with the website statistics exposed to the user associated with the individual website.

A computer-implemented method as described above, wherein the exposing comprises enabling the user associated with the individual website to access the navigation-centric website statistics and the user-centric website statistics via a website statistics user interface.

A computer-implemented method as described above, wherein the navigation-centric website statistics are exposed on a per domain and per page basis for the individual website.

A computing device comprising at least a memory and a processor to implement a data collection module associated with a web browser, the data collection module configured to monitor user navigation to websites using the web browser; generate usage data based on the user navigation to the websites; and communicate the usage data to an analytics service to enable the analytics service to generate website statistics for individual websites using the usage data and additional usage data received from multiple additional computing devices.

A computing device as described above, wherein the data collection module comprises a component of the web browser.

A computing device as described above, wherein the usage data includes telemetry data.

A computing device as described above, wherein the data collection module is further configured to monitor user interactions with resources other than the web platform; and generate the usage data based at least in part on the user interactions with resources other than the web platform.

A computing device as described above, wherein the data collection module is further configured to include a user identifier of the user with the usage data communicated to the analytics service.

A computing device as described above, wherein the usage data enables the analytics service to generate website statistics for individual websites which are not configured with analytics tracking code.

A computer-implemented method comprising: publishing a website without configuring the website to include an analytics tracker; receiving website statistics generated from navigation data collected by multiple web browsers that navigate to the website; and providing the website statistics in a website statistics user interface for access by a user associated with the website.

A computer-implemented method as described above, wherein the website statistics are generated from telemetry data collected by multiple web browsers that navigate to the website.

A computer-implemented method as described above, wherein the website statistics includes application usage statistics corresponding to user interaction with applications other than the web browser.

A computer-implemented method as described above, wherein the website statistics includes personal information associated with users that access the website using the web browser.

Although the example implementations have been described in language specific to structural features and/or methodological acts, it is to be understood that the implementations defined in the appended claims is not necessarily limited to the specific features or acts described. Rather, the specific features and acts are disclosed as example forms of implementing the claimed features.

## Claims

1. A system comprising:
at least a memory and a processor to implement an analytics service, the analytics service configured to perform operations comprising:
receiving (602) usage data (116) from web platforms (112) implemented at a plurality of computing devices (102), the usage data including navigation data (202) corresponding to navigation to websites using the web platforms, the usage data further comprising a user identifier (208) of the user associated with each web platform, and the usage data further comprising at least one of personal information (206) associated with the user or resource usage data (204) corresponding to interactions by the user with resources or applications other than the web platform;
correlating (604) the usage data with individual websites navigated to using the web platforms;
for each individual website, analyzing (606) the usage data to generate website statistics (124) associated with the individual website; and
exposing (608) the website statistics associated with the individual websites to a user associated with the individual website;
wherein the website statistics includes navigation-centric website statistics (302) including statistics or analytics related to use of the web platform, and the navigation-centric website statistics is based on the navigation data; and
wherein the website statistics includes user-centric website statistics (312) including statistics or analytics corresponding to users that navigated to the individual website, and the user-centric website statistics is based on the resource usage data and/or personal information, wherein it is determined that a user navigated to the individual website based on the navigation data and the user identifier, and then the user-centric website statistics is generated based on the resource usage data and/or the personal information associated with the user.

2. The system of claim 1, wherein the web platforms (112) comprise web browsers.

3. The system of claim 1, wherein the navigation data (202) includes web addresses of websites navigated to using the web platforms.

4. The system of claim 1, wherein the navigation-centric website statistics (302) comprises one or more of page hits (304) to the website, an average visit duration (306) of visits to the website, unique users (308) that visited the website, or performance metrics (310) associated with the website.

5. The system of claim 1, wherein the exposing comprises enabling the user associated with the individual website to access the navigation-centric website statistics and the user-centric website statistics via a website statistics user interface.

6. The system of claim 1, wherein the navigation-centric website statistics are exposed on a per domain and per page basis for the individual website.

7. A computing device comprising:
at least a memory and a processor to implement a data collection module associated with a web browser, the data collection module (114) configured to:
monitor (502) user navigation to websites using the web browser;
generate (506) usage data (116) including navigation data corresponding to the user navigation to the websites, the usage data further comprising a user identifier of the user associated with the web browser, and the usage data further comprising at least one of personal information associated with the user or resource usage data corresponding to interactions by the user with resources or applications other than the web browser; and
communicate (508) the usage data to an analytics service (122) to enable the analytics service to correlate the usage data with individual websites navigated to using the web browser and generate website statistics for individual websites using the usage data and additional usage data received from multiple additional computing devices.

8. The computing device of claim 7, wherein the data collection module (114) comprises a component of the web browser.

9. The computing device of claim 7, wherein the usage data includes telemetry data.

10. The computing device of claim 7, wherein the data collection module is further configured to:
monitor (504) user interactions with resources other than the web platform; and
generate the usage data based at least in part on the user interactions with resources other than the web platform.

## Patentansprüche

1. System, umfassend:
zumindest einen Speicher und einen Prozessor zum Implementieren eines Analysedienstes, wobei der Analysedienst konfiguriert ist, Operationen durchzuführen, umfassend:
Empfangen (602) von Nutzungsdaten (116) von Web-Plattformen (112), die bei einer Mehrzahl von Rechenvorrichtungen (102) implementiert sind, wobei die Nutzungsdaten Navigationsdaten (202) entsprechend einer Navigation zu Websites unter Verwendung der Web-Plattformen enthalten, wobei die Nutzungsdaten ferner eine Benutzerkennung (208) des Benutzers, der mit jeder Web-Plattform verknüpft ist, umfassen und die Nutzungsdaten ferner zumindest eines von persönlichen Informationen (206), die mit dem Benutzer verknüpft sind, oder Ressourcennutzungsdaten (204) entsprechende Interaktionen durch den Benutzer mit anderen Ressourcen oder Anwendungen als der Web-Plattform umfassen;
Korrelieren (604) der Nutzungsdaten mit einzelnen Websites, zu welchen unter Verwendung der Web-Plattformen navigiert wird;
für jede einzelne Website, Analysieren (606) der Nutzungsdaten, um eine Website-Statistik (124) zu generieren, die mit der einzelnen Website verknüpft ist; und Darlegen (608) der Website-Statistik, die mit der einzelnen Website verknüpft ist, einem Benutzer, der mit der einzelnen Website verknüpft ist;
wobei die Website-Statistik eine navigationszentrierte Website-Statistik (302) enthält, die eine Statistik oder Analyse enthält, die sich auf eine Verwendung der Web-Plattform bezieht, und die navigationszentrierte Website-Statistik auf den Navigationsdaten beruht; und
wobei die Website-Statistik eine benutzerzentrierte Website-Statistik (312) enthält, die eine Statistik oder Analyse entsprechend Benutzern enthält, die zu der einzelnen Website navigiert haben, und die benutzerzentrierte Website-Statistik auf den Ressourcennutzungsdaten und/oder persönlichen Informationen beruht, wobei auf Basis der Navigationsdaten und der Benutzerkennung bestimmt wird, dass ein Benutzer zu der einzelnen Website navigiert hat, und dann die benutzerzentrierte Website-Statistik auf Basis der Ressourcennutzungsdaten und/oder der persönlichen Informationen, die mit dem Benutzer verknüpft sind, erstellt wird.

2. System nach Anspruch 1, wobei die Web-Plattformen (112) Web-Browser umfassen.

3. System nach Anspruch 1, wobei die Navigationsdaten (202) Webadressen von Websites enthalten, zu welchen unter Verwendung der Web-Plattformen navigiert wurde.

4. System nach Anspruch 1, wobei die navigationszentrierte Website-Statistik (302) eines oder mehrere von Seitenaufrufen (304) bei der Website, einer durchschnittlichen Besuchsdauer (306) von Besuchen bei der Website, einzigartigen Benutzern (308), die die Website besuchten, oder Leistungsmetrik (310) in Verknüpfung mit der Website umfassen.

5. System nach Anspruch 1, wobei das Darlegen umfasst, dem Benutzer, der mit der einzelnen Website verknüpft ist, einen Zugang zu der navigationszentrierten Website-Statistik und der benutzerzentrierten Website-Statistik über eine Website-Statistik-Benutzerschnittstelle zu erlauben.

6. System nach Anspruch 1, wobei die navigationszentrierte Website-Statistiken auf einer Basis pro Domäne und pro Seite für die einzelne Website dargelegt werden.

7. Rechenvorrichtung, umfassend zumindest einen Speicher und einen Prozessor zum Implementieren eines Datensammelmoduls, das mit einem Web-Browser verknüpft ist, wobei das Datensammelmodul (114) konfiguriert ist zum:
Überwachen (502) einer Benutzernavigation zu Websites unter Verwendung des Web-Browsers;
Generieren (506) von Nutzungsdaten (116), die Navigationsdaten entsprechend der Benutzernavigation zu den Websites enthalten, wobei die Nutzungsdaten ferner eine Benutzerkennung des Benutzers, der mit dem Web-Browser verknüpft ist, umfassen und die Nutzungsdaten ferner zumindest eines von persönlichen Informationen die mit dem Benutzer verknüpft sind oder Ressourcennutzungsdaten entsprechend Interaktionen durch den Benutzer mit anderen Ressourcen oder Anwendungen als dem Web-Browser umfassen; und
Kommunizieren (508) der Nutzungsdaten zu einem Analysedienst (122), um dem Analysedienst zu erlauben, die Nutzungsdaten mit einzelnen Websites zu korrelieren, zu welchen unter Verwendung des Web-Browsers navigiert wurde, und unter Verwendung der Nutzungsdaten und zusätzlicher Nutzungsdaten, die von mehreren zusätzlichen Rechenvorrichtungen empfangen wurde, Website-Statistiken für einzelne Websites zu generieren.

8. Rechenvorrichtung nach Anspruch 7, wobei das Datensammelmodul (114) eine Komponente des Web-Browsers umfasst.

9. Rechenvorrichtung nach Anspruch 7, wobei die Nutzungsdaten Telemetriedaten enthalten.

10. Rechenvorrichtung nach Anspruch 7, wobei das Datensammelmodul ferner konfiguriert ist, zum:
Überwachen (504) von Benutzerinteraktionen mit anderen Ressourcen als der Web-Plattform; und
Generieren der Nutzungsdaten zumindest teilweise auf Basis der Benutzerinteraktionen mit anderen Ressourcen als der Web-Plattform.

## Revendications

1. Système comprenant :
au moins une mémoire et un processeur pour mettre en oeuvre un service analytique, le service analytique étant configuré pour effectuer des opérations comprenant :
la réception (602) de données d'utilisation (116) de plateformes Web (112) mises en oeuvre au niveau d'une pluralité de dispositifs informatiques (102), les données d'utilisation comprenant des données de navigation (202) correspondant à la navigation vers des sites Web en utilisant les plateformes Web, les données d'utilisation comprenant en outre un identifiant d'utilisateur (208) de l'utilisateur associé à chaque plateforme Web, et les données d'utilisation comprenant en outre au moins l'une d'informations personnelles (206) associées à l'utilisateur ou de données d'utilisation de ressource (204) correspondant à des interactions de l'utilisateur avec des ressources ou des applications autres que la plateforme Web ;
la corrélation (604) des données d'utilisation avec des sites Web individuels visités en utilisant les plateformes Web ;
pour chaque site Web individuel, l'analyse (606) des données d'utilisation pour générer des statistiques de site Web (124) associées au site Web individuel ; et
l'exposition (608) des statistiques de site Web associées aux sites Web individuels à un utilisateur associé au site Web individuel ;
dans lequel les statistiques de site Web comprennent des statistiques de site Web centrées sur la navigation (302) comprenant des statistiques ou des analyses se rapportant à l'utilisation de la plateforme Web, et les statistiques de site Web centrées sur la navigation sont basées sur les données de navigation ; et
dans lequel les statistiques de site Web comprennent des statistiques de site Web centrées sur l'utilisateur (312) comprenant des statistiques ou des analyses correspondant aux utilisateurs qui ont navigué vers le site Web individuel, et les statistiques de site Web centrées sur l'utilisateur sont basées sur les données d'utilisation de ressource et/ou les informations personnelles, dans lequel il est déterminé qu'un utilisateur a navigué vers le site Web individuel sur la base des données de navigation et de l'identifiant d'utilisateur, et ensuite les statistiques de site Web centrées sur l'utilisateur sont générées sur la base des données d'utilisation de ressource et/ou des informations personnelles associées à l'utilisateur.

2. Système selon la revendication 1, dans lequel les plateformes Web (112) comprennent des navigateurs Web.

3. Système selon la revendication 1, dans lequel les données de navigation (202) comprennent les adresses Web des sites Web visités en utilisant les plateformes Web.

4. Système selon la revendication 1, dans lequel les statistiques de site Web centrées sur la navigation (302) comprennent un ou plusieurs d'accès à une page (304) du site Web, d'une durée de visite moyenne (306) des visites au site Web, d'utilisateurs uniques (308) qui ont visité le site Web, ou de métriques de performance (310) associées au site Web.

5. Système selon la revendication 1, dans lequel l'exposition comprend le fait de permettre à l'utilisateur associé au site Web individuel d'accéder aux statistiques de site Web centrées sur la navigation et aux statistiques de site Web centrées sur l'utilisateur par l'intermédiaire d'une interface utilisateur de statistiques de site Web.

6. Système selon la revendication 1, dans lequel les statistiques de site Web centrées sur la navigation sont exposées sur une base par domaine et par page pour le site Web individuel.

7. Dispositif informatique comprenant :
au moins une mémoire et un processeur pour mettre en oeuvre un module de collecte de données associé à un navigateur Web, le module de collecte de données (114) étant configuré pour :
surveiller (502) une navigation d'utilisateur vers des sites Web en utilisant le navigateur Web ;
générer (506) des données d'utilisation (116) comprenant des données de navigation correspondant à la navigation d'utilisateur vers des sites Web, les données d'utilisation comprenant en outre un identifiant d'utilisateur de l'utilisateur associé au navigateur Web, et les données d'utilisation comprenant en outre au moins l'une d'informations personnelles associées à l'utilisateur ou de données d'utilisation de ressource correspondant aux interactions de l'utilisateur avec des ressources ou des applications autres que le navigateur Web ; et
communiquer (508) les données d'utilisation à un service analytique (122) pour permettre au service analytique de corréler les données d'utilisation avec les sites Web individuels visités en utilisant le navigateur Web et générer des statistiques de site Web pour les sites Web individuels en utilisant les données d'utilisation et des données d'utilisation supplémentaires reçues de multiples dispositifs informatiques supplémentaires.

8. Dispositif informatique selon la revendication 7, dans lequel le module de collecte de données (114) comprend un composant du navigateur Web.

9. Dispositif informatique selon la revendication 7, dans lequel les données d'utilisation comprennent des données de télémétrie.

10. Dispositif informatique selon la revendication 7, dans lequel le module de collecte de données est en outre configuré pour :
surveiller (504) les interactions d'utilisateur avec des ressources autres que la plateforme Web ; et
générer les données d'utilisation sur la base au moins en partie des interactions d'utilisateur avec des ressources autres que la plateforme Web.
